# EUROPÄISCHE PATENTSCHRIFT

(11) **EP 1 044 916 B1**
(45) Veröffentlichungstag und Bekanntmachung des Hinweises auf die Patenterteilung: **30.07.2003**
(21) Anmeldenummer: 00105282.8
(22) Anmeldetag: 14.03.2000
(51) Int. Cl.: B65H 49/16

(54) **Spulengatter**
Bobbin creel
Cantre à bobines

(30) Priorität: 13.04.1999 DE 19916483
(43) Veröffentlichungstag der Anmeldung: 18.10.2000
(73) Patentinhaber: Memminger-IRO GmbH, 72280 Dornstetten (DE)
(72) Erfinder: Wörner, Christoph, 72270 Baiersbronn (DE)
(74) Vertreter: Patentanwälte Rüger, Barthelt & Abel

(56) Entgegenhaltungen:
- DE-A- 2 331 542
- DE-U- 7 338 340
- DE-U- 8 428 056

## Beschreibung

Die Erfindung betrifft ein Spulengatter zur Aufnahme von Spulen auf denen fadenförmiges Gut aufgewickelt ist, mit rohrförmigen Tragstreben und rohrförmigen Verbindungsstreben, die an Anschlußstellen durch Verbindungsmittel zu einem vorzugsweise standfähigen Gestell verbunden sind, das an Trag- und/oder Verbindungsstreben angeordnete Aufsteckhalter für Spulen aufweist. Solche Spulengatter finden bspw. als sogenannte Seitengatter für Rundstrickmaschinen ausgedehnte Anwendung; sie sind aber auch für andere Anwendungszwecke im Einsatz, bei denen es darauf ankommt von einer Vielzahl von Spulen kommende Fäden, Drähte und dergleichen fadenförmiges Gut einer gemeinsamen Verarbeitungs- oder Behandlungsstelle zuzuführen.

Beispielsweise aus dem DE 7 338 340 U ist ein Spulengatter für eine Rundstrickmaschine bekannt, von dem die Erfindung ausgeht und das aus einzelnen Elementen aufgebaut ist, die zu einem Rund-oder Flachgatter zusammengefügt sind. Diese Elemente bestehen aus vertikalen Tragstreben und horizontalen Verbindungsstreben, die jeweils in Gestalt von im Querschnitt rechteckigen Profilrohren ausgebildet und zu einem standfähigen Gestell zusammengefügt sind. Den an den Tragstreben angeordneten Aufsteckhaltern für die Spulen sind Fadenleitelemente zugeordnet, die entsprechend den jeweiligen Fadenlaufwegen zweckentsprechend vorgesehen sind. Da solche Spulengatter notwendigerweise recht sperrige Gebilde sind, werden die einzelnen Elemente in der Regel unmontiert angeliefert und an Ort und Stelle zusammengesetzt. Die Art der Verbindung der einzelnen Streben des vorgenannten bekannten Spulengatters ist im einzelnen in der erwähnten Druckschrift nicht erläutert, doch sind in der Praxis dafür eine ganze Reihe von Verbindungsmitteln gebräuchlich, die bspw. als Steckverbinder oder nach Art von Rohrschellen ausgebildet sind.

Mit Rücksicht auf die immer größer werdenden Spulengewichte werden an die Stabilität des Spulengatters und damit auch an die Festigkeit der Verbindungen der einzelnen Streben des Gatters erhebliche mechanische Anforderungen gestellt. Daneben soll die Montage des Spulengatters einfach sein und von ungeschultem Personal durchgeführt werden können. Schliesslich sollen die Verbindungsmittel möglichst wenige, leicht zu handhabende Einzelteile aufweisen.

Aufgabe der Erfindung ist es deshalb ein Spulengatter zu schaffen, dass diese Anforderungen in möglichst optimaler Weise erfüllt.

Zur Lösung dieser Aufgabe ist das eingangs genannte Spulengatter erfindungsgemäß dadurch gekennzeichnet, dass die Verbindungsmittel ein in eine rohrförmige Strebe einschiebbares Verbindungselement und eine vorzugsweise in eine an der jeweiligen Anschlußstelle abgehende andere rohrförmige Strebe eingefügte Gewindemutter aufweisen, dass das Verbindungselement ein zur Anlage an der Innenwandung der zugeordneten Strebe eingerichtetes Druckstück und mit diesem verbundene Haltemittel aufweist, durch die das Verbindungselement in der Strebe lösbar fixierbar ist und dass in bei eingeschobenem Verbindungselement die beiden Streben durch einen, eine Durchgangsbohrung in der Wandung der einen Strebe durchquerenden und in die Gewindemutter eingeschraubten Schraubenbolzen miteinander verbunden sind, der auf dem Druckstück abgestützt ist.

Durch das in die eine Strebe eingeschobene Druckstück auf dem sich der Schraubenbolzen abstützt, ergibt sich zusammen mit der in die andere Strebe eingefügten Gewindemutter eine sehr stabile, feste Verbindung der beiden Streben. Dadurch dass das Druckstück durch die Haltemittel in der Strebe lösbar fixiert wird bevor der Schraubenbolzen eingefügt wird, wird eine wesentliche Erleichterung der Montage des Spulengatters erzielt. Die Druckstücke brauchen nur in die jeweiligen Streben eingeschoben zu werden bis sie an den jeweiligen Anschlußstellen lagerichtig liegen und dort durch die Haltemittel fixiert sind. Anschliessend können die Trag- und Verbindungsstreben ohne große Mühe an den so vorbereiteten Anschlußstellen miteinander verschraubt werden.

Das Verbindungselement kann aus Kunststoffmaterial bestehen. Es enthält keine kraftaufnehmenden Gewinde oder dergleichen Teile, die besondere Anforderungen an die Materialfestigkeit stellen. Es braucht lediglich die beim Festziehen des Schraubenbolzens auftretende Druckkraft aufzunehmen und auf die Innenwandung der Strebe zu übertragen. Dazu ist es bei zylindrischen Rohren zweckmäßig, wenn das Druckglied eine im Wesentlichen zylindrische Druckfläche zur Anlage an der Innenwand der Strebe aufweist. Hinsichtlich der Herstellungsgenauigkeit dieser Druckfläche, wie überhaupt des ganzen Druckstückes und Verbindungselementes, werden keine besonders hohen Anforderungen gestellt, was im gleichen Maße auch für die Gestalt und Durchmessertoleranz der Innenfläche der rohrförmigen Strebe gilt. So können bspw. ohne weiteres auch geschweisste Rohre verwendet werden, wie überhaupt die Erfindung keineswegs auf zylindrische Rohre beschränkt ist. Die rohrförmigen Streben können in Gestalt von Profilrohren, rechteckigen oder quadratischen Querschnitts, als Vieleck-Profilrohre und dergleichen ausgebildet sein, um nur einige Beispiele zu benennen. Die Haltemittel des Verbindungselementes können ein zum formschlüssigen Zusammenwirken mit der Durchgangsbohrung der Strebe eingerichtetes Halteglied aufweisen, das als ein in die Durchgangsbohrung passender, zapfenförmiger Ansatz auf der Druckfläche des Druckstücks oder als ein, einen Vorsprung auf der Innenwand der Strebe umfassendes Teil ausgebildet sein kann, ohne auf diese Beispiele beschränkt zu sein. Die Haltemittel erlauben es beim Einschieben des Verbindungselementes in die Strebe dieses mit einfachen Mitteln bezüglich der Durchgangsbohrung der jeweiligen Anschlußstelle lagerichtig zu fixieren. Diese Fixierung wird erleichtert, wenn die Haltemittel ein mit dem Druckstück verbundenes, elastisches Abstützmittel aufweisen, durch die das Druckstück gegen die Innenwand der Strebe andrückbar ist. Diese Ausbildung erlaubt es, das Druckstück beim Einschieben in die Strebe an der Anschlußstelle, bspw. mit der Durchgangsbohrung, federnd verrasten zu lassen.

Das erwähnte elastische Abstützmittel weist in einer vorteilhaften Ausführungsform ein im Wesentlichen haarnadelförmiges Federteil auf, das entweder einstückig an das Druckstück angeformt oder als getrenntes Teil, bspw. in Gestalt eines Metallfederblattes, mit diesem verbunden ist. Eine andere Möglichkeit der Ausbildung des elastischen Abstützmittels besteht bspw. in der Verwendung einer Druckfeder, die zwischen dem Druckstück und der Innenwand der Strebe zur Wirkung kommt. Insbesondere bei der schon erwähnten Ausbildung des Verbindungselementes als einstückiges Kunststoffteil bietet sich die haarnadelförmige Ausbildung des Federteils an.

Das Druckstück und die Abstützmittel weisen zweckmäßigerweise jeweils eine durchgehende Bohrung für den Schraubenbolzen auf, wobei die beiden Bohrungen miteinander fluchtend angeordnet sind. Um das Einschieben des Verbindungselementes in die rohrförmige Strebe zu erleichtern, kann die Anordnung derart getroffen sein, dass zumindest das elastische Abstützmittel eine Einrichtung zum Ansetzen eines das Abstützmittel gegen das Druckstück drückenden Werkzeugs, bspw. einer Zange aufweist, was im Einzelnen anhand eines im nachfolgenden beschriebenen Ausführungsbeispiels noch erläutert werden wird.

Schliesslich kann die Durchgangsbohrung alternativ zu einem zylindrischen Loch auch als Langloch in Strebenlängs- oder -umfangsrichtung ausgebildet sein, um damit an den Anschlußstellen eine gewisse Verstellbarkeit der miteinander verbundenen Streben zu erlauben. In diesem Zusammenhang sei erwähnt, dass es die Verwendung des geschilderten Verbindungselementes auch erlaubt, Streben an den Anschlußstellen nicht mit anderen Streben zu verbinden, sondern sie an einer Wand oder dergleichen anzuschrauben, in der eine entsprechende Gewindemutter vorhanden ist.

Weiterbildungen der Erfindung sind der Gegenstand von abhängigen Ansprüchen.

In der Zeichnung sind Ausführungsbeispiele des Gegenstandes der Erfindung dargestellt. Es zeigen:
- Fig. 1: einen Spulengatter gemäß der Erfindung, in perspektivisch schematischer Darstellung;
- Fig. 2: eine Anschlußstelle des Spulengatters nach Fig. 1 im Ausschnitt, in einer Explosionsdarstellung und teilweise aufgeschnitten, unter Veranschaulichung des aus der Strebe herausgenommenen Verbindungselements,
- Fig. 3: eine Anschlußstelle des Spulengatters nach Fig. 1 im axialen Schnitt in einer Seitenansicht und in einer schematischen Darstellung sowie in einem anderen Maßstab und
- Figuren 4 und 5: die Anordnung nach Fig. 3 in zwei abgewandelten Ausführungsformen und in einer entsprechenden Darstellung.

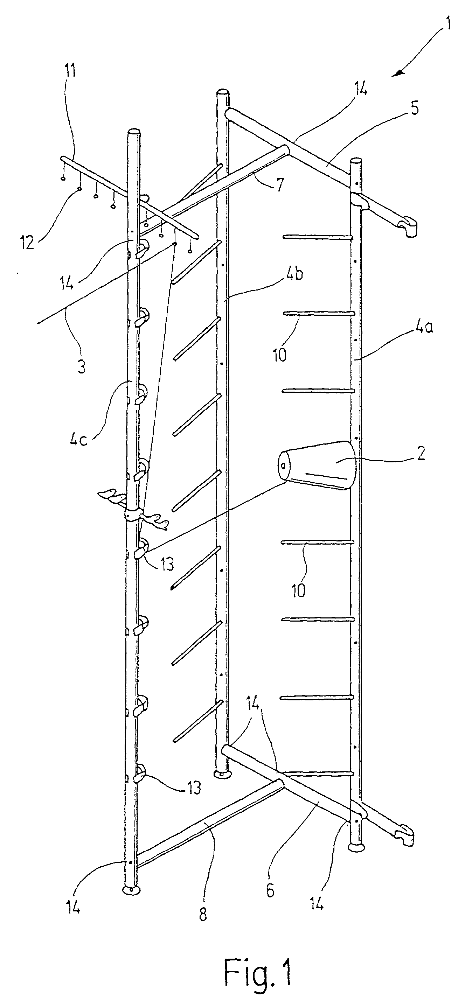

In Figur 1 ist ein in seiner Gebrauchsstellung befindliches Spulengatter 1 veranschaulicht, das der gleichzeitigen Halterung einer Vielzahl von Garnspulen 2 dient, die sich in Bereitschaft befinden oder von denen, wie anhand einer Spule dargestellt, ein Faden 3 für eine nicht veranschaulichte fadenverbrauchende Maschine, wie eine Rundstrickmaschine oder dgl. abgezogen wird. Das Spulengatter 1 enthält drei vertikal stehende Tragstreben 4a, 4b, 4c, die parallel und mit Abstand zueinander angeordnet sind. Sie sind an den Ecken eines gleichschenkligen Dreiecks angeordnet, an dessen Spitze sich die Tragstrebe 4c befindet. Untereinander sind die Tragstreben 4a, 4b, 4c durch horizontale Verbindungsstreben 5, 6, 7 und 8 verbunden, von denen die beiden Verbindungsstreben 5 und 6 die Tragstreben 4a, 4b in der Nähe von deren oberen bzw. deren unteren Enden aneinander befestigen, während die beiden Verbindungsstreben 7 und 8, die T-förmig zu den Verbindungsstreben 5, 6 verlaufen, die Tragstrebe 4c an den Verbindungsstreben 5 und 6 haltern.

Alle Trag- und Verbindungsstreben 4a, 4b, 4c; 5 bis 8 sind bei dem dargestellten Ausführungsbeispiel zylindrische Rohre, die bspw. aus Stahl oder Leichtmetall, etwa Aluminium hergestellt sind. Sie haben alle den gleichen Innen- und Außendurchmesser. Diese Rohre können nahtlos gezogen sein, doch können auch Rohre verwendet werden, die eine geschweißte Längsnaht aufweisen. Die Erfindung ist auch nicht auf Spulengatter beschränkt, die aus Trag- und Verbindungsstreben in Form von zylindrischen Rohren aufgebaut sind, sie erstreckt sich vielmehr auch auf solche Gatter, deren Trag- und Verbindungsstreben aus Profilrohren beliebigen Querschnitts bestehen, bspw. Rohren von rechteckigem, quadratischem oder vieleckigem Querschnitt. Auch hinsichtlich der Materialwahl bestehen keine Einschränkungen. So können bspw. auch ohne weiteres Kunststoffrohre Verwendung finden. Schließlich ist zu erwähnen, dass das in Figur 1 dargestellte Spulengatter nur eine zur Veranschaulichung der Erfindung gewählte einfache Ausführungsform eines solchen Spulengatters ist. Die Erfindung umfasst alle bekannten Formen von Spulengattern, wie Rund- oder Flachgatter, belüftete oder unbelüftete Gatter etc., wie sie in der Praxis, abhängig von dem jeweiligen Einsatzzweck, vorkommen.

An den Tragstreben 4a, 4b, 4c sind in der bei solchen Spulengattern üblicher Weise Aufsteckhalter 10 für die Garnspulen 2 befestigt. Außerdem sind in dem Spulengatter Fadenleit- und Umlenkeinrichtungen in Gestalt von Ösen und dgl. vorgesehen, wie sie an sich bekannt und etwa bei 11, 12 schematisch angedeutet sind. Jeder der Fäden 3 läuft außerdem über eine Fadenbremse 13 sowie ggfs. einen Knotenfänger etc.. Diese Elemente sind bekannt und deshalb nicht erläutert.

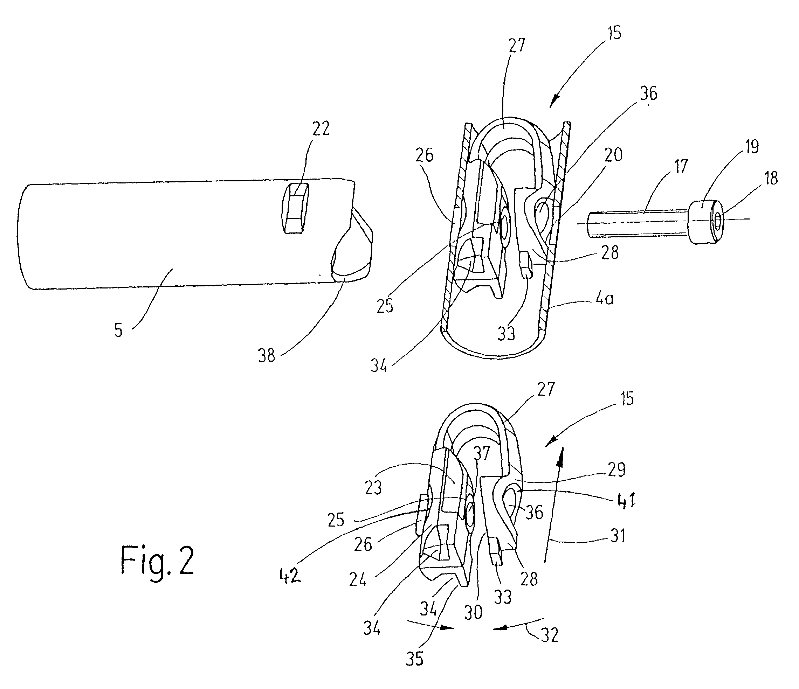

Die Verbindung der Verbindungsstreben 6, 8 und 7, 9 miteinander, sowie mit den Tragstreben 4a, 4b, 4c geschieht an Anschlussstellen 14 in der im nachstehenden anhand der Figuren 2 bis 5 geschilderten erfindungsgemäßen Weise, wobei als Beispiel die Anschlußstelle 14 zwischen der Tragstrebe 4a und der Verbindungsstrebe 5 ausgewählt wurde. Die Ausbildung der anderen Anschlußstellen 14 ist identisch.

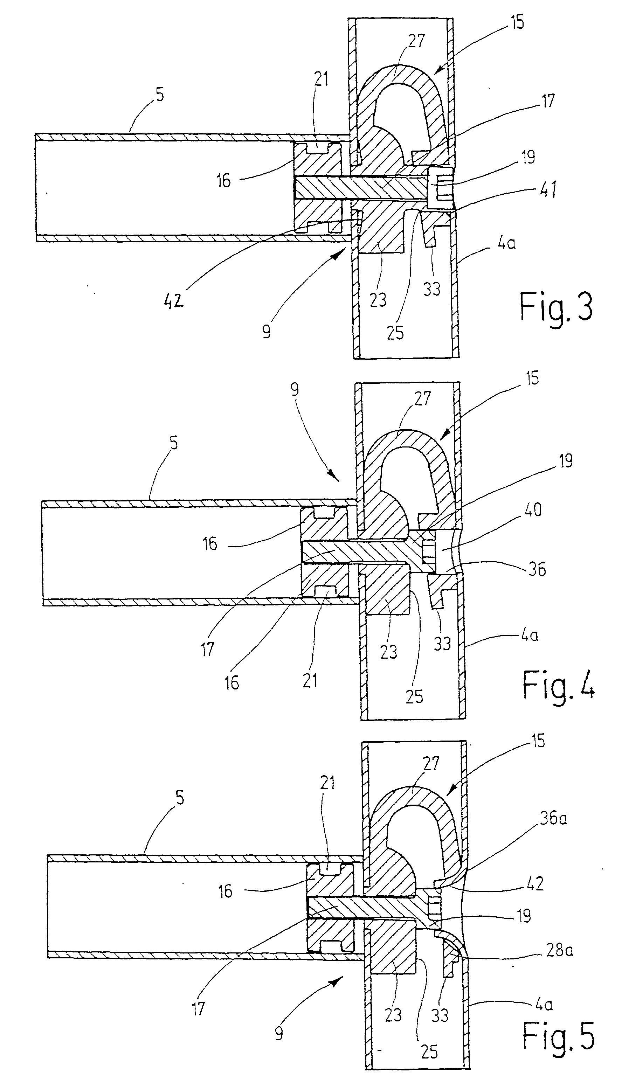

Die Verbindung zwischen der Verbindungsstrebe 5 und der Tragstrebe 4a erfolgt durch Verbindungsmittel, die ein in die rohrförmige Tragstrebe 4a einschiebbares Verbindungselement 15 aufweisen, das in Figur 2 sowohl als loses Einzelteil als auch in dem in die Tragstrebe 4a eingeschobenen Zustand veranschaulicht ist. Teile dieser Verbindungsmittel sind außerdem eine in die Verbindungsstrebe 5 eingefügte Gewindemutter 16 (Figur 3) und ein in diese einschraubbarer Gewindebolzen 17, der mit einem Innensechskant-Schlüsselansatz 18 in seinem Kopf 19 ausgebildet ist und dem eine als Stufenbohrung ausgebildete Durchgangsbohrung 20 in der Tragstrebe 4a zugeordnet ist. Die zylindrische Gewindemutter 16 ist mit einer Ringnut 21 ausgebildet, in die wenigstens eine in die Wandung der Verbindungsstrebe 5 eingedrückte Sicke 22 (Figur 2) eingreift, durch die die Gewindemutter 16 in der Verbindungsstrebe 5 formschlüssig ortsfest orientiert ist.

Das Verbindungselement 15 ist einstückig aus einem Kunststoff hergestellt; alternativ kann es aber auch aus Metall, bspw. Druckguss oder mehrteilig aus geeigneten Materialien erzeugt werden. Es weist ein Druckstück 23 auf, das eine der Innenwandung der Tragstrebe 4 angepasste Druckfläche 24 trägt, die bei dem dargestellten Ausführungsbeispiel im Wesentlichen teilzylindrisch mit einem auf den Innendurchmesser der rohrförmigen Tragstrebe 4a abgestimmten Zylinderdurchmesser ist. Auf der der Druckfläche 24 gegenüberliegenden Seite ist das Druckstück 23 durch eine im Wesentlichen ebene Auflagefläche 25 für den Schraubenkopf 19 des Bolzens 17 versehen. Das Druckstück 23 ist massiv, kann aber auch verrippt oder sonst in geeigneter Weise strukturiert sein. Es muss in jedem Fall aber in der Lage sein, die von dem festgezogenen Schraubenbolzen 17 ausgehenden Druckkräfte aufzunehmen.

Mit dem Druckstück 23 sind Haltemittel verbunden, durch die das Verbindungselement 15 lösbar in der Tragstrebe 4a fixierbar ist. Diese Haltemittel weisen ein an dem Druckstück 23 im Bereiche dessen Druckfläche 24 angeformtes Halteglied in Gestalt eines zylindrischen, zapfenförmigen Ansatzes 26 auf, dessen Außendurchmesser auf den Durchmesser der Durchgangsbohrung 20 so abgestimmt ist, dass der zapfenförmige Ansatz 26 bei in die Tragstrebe 4a eingeschobenen Verbindungselement 15 in die Durchgangsbohrung 20 einrasten und damit das Verbindungselement 15 lagefest fixieren kann. Außerdem weisen die Abstützmittel ein mit dem Druckstück 23 verbundenes elastisches Abstützmittel auf, das durch ein angeformtes, im Wesentlichen haarnadelförmiges Federteil 27 gebildet ist, das sich mit einem Schenkel an eine Stirnseite des Druckstückes 23 anschließt und an seinem Schenkel endseitig mit einem Ringflansch 28 ausgebildet ist. Der Ringflansch 28 ist auf seiner in Figur 2 oberen, der Innenwand der Tragstrebe 4a zugewandten Außenseite mit einer der Gestalt dieser Innenwand angepassten, etwa teilzylindrisch gekrümmten Abstützfläche 29 versehen, der auf der Innenseite des Ringflansches 28 eine im Wesentlichen ebene Anlagefläche 30 zugeordnet ist. Die axiale Höhe des Ringflansches 28 ist derart bemessen, dass das Verbindungselement 15 bei elastisch zusammengedrücktem Federteil 27 in die rohrförmige Tragstrebe 4a eingeschoben werden kann, wie dies in Figur 2 durch einen Pfeil 31 angedeutet ist.

Um das zum Einschieben des Verbindungselements 15 in die Tragstrebe 4a erforderliche, in Figur 2 durch zwei Pfeile 32 angedeutete elastische Zusammendrücken des Ringflansches 28 und des Druckstückes 23 zu erleichtern, sind an dem Ringflansch 28 und an dem Druckstück 23 Einrichtungen zum Ansetzen eines Werkzeuges, bspw. einer Zange vorgesehen. Diese Einrichtungen bestehen aus einer auf der dem Federteil 27 gegenüberliegenden Seite an den Ringflansch 28 angeformten, vorspringenden Nase 33 und zwei an der gegenüberliegenden Seite des Druckstückes 23 vorgesehenen Aussparungen 34, die auf der der Auflagefläche 25 zugewandten Seite durch eine Werkzeugangriffsfläche 35 begrenzt sind, an der bspw. ein Zangenbacken angreifen kann.

Durch den Ringflansch 28 und das Druckstück 23 erstrecken sich durchgehende Bohrungen 36, 37 für den Schraubenbolzen 17, von denen die Bohrung 37 koaxial durch den zylindrischen Ansatz 26 verläuft. Die Bohrung 36 in dem Ringflansch 28 weist einen zur Aufnahme des Schraubenkopfes 19 geeigneten größeren Durchmesser auf als die für den Schaft des Schraubenbolzens 17 bestimmte Bohrung 37 in dem Druckstück 23.

Um bei dem Ausführungsbeispiel nach den Fig. 1 bis 3 die Verbindungsstrebe 5 mit der Tragstrebe 4a zu verbinden, wird die Tragstrebe 4a zunächst mit der für die Verbindungsstelle 14 lagerichtigen Durchgangsbohrung 20 versehen. Sodann wird ein Verbindungselement 15 genommen, entsprechend den Pfeilen 32 der Fig. 2 unten elastisch zusammengedrückt und in Richtung des Pfeiles 31 in die Tragstrebe 4a so weit eingeschoben bis ihr Ansatz 26 in die Durchgangsbohrung 20 einrastet.

Bei freigegebenem Federteil 27 ist das Verbindungselement 15 damit lagefest in der Tragstrebe 4a fixiert, weil das Federteil 27 die Druckfläche 24 und die dieser gegenüberliegende Abstützfläche 29 elastisch gegen die Innenwand der rohrförmigen Tragstrebe 4a anpresst.

Es kann nunmehr der Schraubenbolzen 17 in die Durchgangsbohrung 20, und die Bohrungen 36, 37 des Verbindungselementes 15 eingeschoben und mit der vorher in die Verbindungsstrebe 5 eingefügten und dort mittels der Sicke 22 oder durch Einbördeln fixierten Gewindemutter 16 verschraubt werden. An ihrem der Tragstrebe 4a zugewandten, stirnseitigen Ende ist die Verbindungsstrebe 5 bei 38 (Fig. 2) etwa teilkreisförmig ausgespart und damit an die Zylinderform der Tragstrebe 4a angepasst, so dass sich eine gute verdreh- und kippsichere Anlage ergibt.

Beim Festziehen des Schraubenbolzens 17 liegt dieser auf der ebenen Auflagefläche 25 des Druckstückes 23 auf, das die von dem Kopf 19 des Schraubenbolzens 17 eingeleitete Druckkraft über seine Druckfläche 24 gleichmäßig auf die Innenwand der Tragstebe 4a verteilt, so dass eine sichere, hoch belastbare Verbindung zwischen der Verbindungsstrebe 5 und der Tragstrebe 4a zustande kommt. Da der Schraubenkopf 19 bei festgezogenem Schraubenbolzen 17 in der Bohrung 36 des Ringflansches 28 des Verbindungselementes 15 aufgenommen ist, kann es die Krafteinleitung von dem Schraubenbolzen 17 in das Druckstück 23 und in die Tragstrebe 4a nicht behindern. Gleichzeitig ist der Kopf 19 des Schraubenbolzens 17 in der Tragstrebe 4a vertieft verwahrt.

In Fällen, in denen bei der Montage eine gewisse Nachstellmöglichkeit an der jeweiligen Anschlußstelle 16 erwünscht ist, kann die Durchgangsbohrung 20 auch als Langloch ausgebildet sein, dessen Achse entweder in Strebenlängs- oder -umfangsrichtung orientiert ist. Die bei festgezogenem Schraubbolzen 17 erreichte reibschlüssige Verbindung zwischen den miteinander verbundenen Streben reicht in der Regel für eine feste, belastungsfähige Verbindung aus, so dass auf den durch eine zylindrische Durchgangsbohrung 20 erzeugten Formschluß verzichtet werden kann.

Die durch den versenkt angeordneten Schraubenkopf 19 bedingte sacklochartige Vertiefung 40 in der Wandung der Tragstrebe 4a (Fig. 3) stört in der Regel nicht; sie kann aber erforderlichenfalls durch einen einfachen, eingedrückten Verschlußstopfen verschlossen werden. Alternativ kann das Druckstück 23 aber auch so ausgebildet werden, dass im montierten Zustand der Schraubenkopf 19 die Durchgangsbohrung 20 in der Wandung der Tragstrebe 4a im Wesentlichen verschliesst. Zu diesem Zwecke ist bei der Ausführungsform nach Fig. 4 die Auflagefläche 25 auf einem an das Druckstück 23 angeformten, hülsenförmigen Fortsatz 41 angeordnet, der in die Bohrung 36 des Ringflansches 28 passt und dessen axiale Länge so bemessen ist, dass die Stirnfläche des Schraubenkopfes 19 im montierten Zustand etwa mit der Außenfläche der Tragstrebe 4a abschliesst. Diese Ausführungsform ergibt noch eine zusätzliche Festigkeit der Verbindung dadurch, dass der Schraubenkopf 19 an der Wandung der Durchgangsbohrung 20 seitlich formschlüssig abgestützt ist.

Dieser Vorteil gilt auch für die in Fig. 5 dargescellte weitere abgewandelte Ausführungsform, bei der die Wandung der Tragstrebe 4a auf der der Anschlußstelle 14 gegenüberliegenden Seite nach innen zu trichterförmig eingezogen ist, wie dies bei 42 veranschaulicht ist. Bei dieser Ausführungsform kann auch auf den mit der Durchgangsbohrung 20 verrastbaren zylindrischen Ansatz 26 verzichtet werden, weil die vorläufige Fixierung des Verbindungselementes 15 in der Tragstrebe 4a in der dargestellten Weise durch den Ringflansch 28a des Verbindungselementes 15 erfolgen kann, dessen konische Bohrung 36a auf den Druchmessers des von ihm aufzunehmenden einen Vorsprung bildenden eingezogene Wandungsteiles 42 abgestimmt ist.

Abschliessend sei erwähnt, dass das Verbindungselement 15, wie bereits früher bemerkt, auch mehrteilig ausgebildet sein kann. So kann z.B. das Federteil 27 in Gestalt einer metallischen Druckfeder ausgebildet sein, die mit dem Druckstück 23 verbunden ist, wie es überhaupt denkbar ist, das Federteil 27 durch eine Schraubenfeder oder ein anders gestaltetes Federelement zu ersetzen, das einstückig oder als separates Teil mit dem Druckglied 23 verbunden ist.

Die Erfindung wurde anhand einer Verbindungsstelle 14 zwischen einer Trag- und einer Verbindungsstrebe erläutert. Sie kann naturgemäß für alle Arten von rohrförmigen Teilen verwendet werden, wobei es auch denkbar ist ein solches rohrförmiges Teil, das vergleichbar der Tragstrebe 4a des Ausführungsbeispiels ist, mittels des Schraubenbolzens 17 nicht an einer abgehenden Strebe, sondern an einem festen Teil, bspw. an einer Wand, die mit einem entsprechenden Gewindeloch ausgebildet ist, zu befestigen.

Die als Stufenbohrung ausgebildete Durchgangsbohrung 20 in der Tragstrebe 4a wird in der Regel durch Bohren oder Stanzen hergestellt. Dabei tritt auf der Strebeninnenseite ein Bohr- oder Stanzgrat auf, der abhängig von der Qualität der verwendeten Werkzeuge mehr oder minder ausgeprägt ist. Um eine Beeinträchtigung des ordnungsgemäßen Sitzes des Druckstückes 15 in der Tragstrebe 4a zu verhüten ist in der insbesondere aus Fig. 2 zu ersehenden Weise die Bohrung 36 in dem Ringflansch 28 mit einer kegelstumpfförmigen Anfasung 41 versehen, die im Bereiche der Abstützfläche 29 ausgebildet ist. Aus dem gleichen Grunde ist der Ansatz 26 von einer in dem Druckstück 23 im Bereiche des Druckfläche 24 angeordneten, etwa kegelstumpfförmigen, vertieften Fase 42 ungeben. Da das Verbindungsstück 15 somit auf seinen beiden einander gegenüberliegenden Seiten mit einer die Bohrung 36 und die Bohrung 37 umgebenden Vertiefung in Gestalt der Anfasung 41 bzw. der Fase 42 umgeben ist, ist es gleichgültig von welcher Seite aus die Durchgangsbohrung 20 in die Tragstrebe 4a eingebohrt oder eingestanzt wird. Außerdem bringt die vertiefte Fase 42 noch den Vorteil mit sich, dass die Krafteinleitung von der Druckfläche 24 in die Innenwandung der Tragstrebe 4a von dem Rand der Durchgangsbohrung 20 weg, radial nach außen in die Nähe der Wand der angeschlossenen Verbindungsstrebe 5 verlegt wird. Dadurch wird die Abstützung der Verbindungsstrebe 5 auf der Außenwandung der Tragstrebe 4a noch verbessert. Dies ist insbesondere dann von Bedeutung, wenn der Schraubenbolzen 17 übermäßig fest angezogen werden sollte, so dass das Druckstück 23 im Bereiche der Bohrung 37 eine gewisse Durchbiegung erfährt.

## Patentansprüche

1. Spulengatter (1) zur Aufnahme von Spulen (2) auf denen fadenförmiges Gut (3) aufgewickelt ist, mit rohrförmigen Tragstreben (4a, 4b, 4c) und rohrförmigen Verbindungsstreben (5-8), die an Anschlußstellen (14) durch Verbindungsmittel zu einem vorzugsweise standfähigen Gestell miteinander verbunden sind, das an Trag- und/oder Verbindungsstreben angeordnete Aufsteckhalter (10) für Spulen aufweist, **dadurch gekennzeichnet, dass** die Verbindungsmittel ein in eine rohrförmige Strebe (4a) einschiebbares Verbindungselement (15) und eine vorzugsweise in eine an der jeweiligen Anschlußstelle (14) abgehende, andere rohrförmige Strebe (5) eingefügte Gewindemutter (16) aufweisen, dass das Verbindungselement (15) ein zur Anlage an der Innenwandung der zugeordneten Strebe (4a) eingerichtetes Druckstück (23) und mit diesem verbundene Haltemittel (26, 27, 28) aufweist, durch die das Verbindungselement (15) in der Strebe (4a) lösbar fixierbar ist und dass bei eingeschobenem Verbindungselement (15) die beiden Streben (4a, 5) durch einen eine Durchgangsbohrung (20) in der Wandung der einen Strebe (4a) durchquerenden und in die Gewindemutter (16) eingeschraubten Schraubenbolzen (17) miteinander verbunden sind, der auf dem Druckstück (23) abgestützt ist.

2. Spulengatter nach Anspruch 1, **dadurch gekennzeichnet, dass** das Verbindungselement (15) aus Kunststoffmaterial besteht.

3. Spulengatter nach Anspruch 1 oder 2, **dadurch gekennzeichnet, dass** das Druckstück (23) eine im Wesentlichen der Strebeninnenwand angepasste Druckfläche (24) zur Anlage an der Innenwand der Strebe (4a) aufweist.

4. Spulengatter nach einem der vorhergehenden Ansprüche, **dadurch gekennzeichnet, dass** die Haltemittel ein zum formschlüssigen Zusammenwirken mit der Durchgangsbohrung (20) der Strebe (4a) eingerichtetes Halteglied (26) aufweisen.

5. Spulengatter nach Anspruch 4, **dadurch gekennzeichnet, dass** das Halteglied ein in die Durchgangsbohrung (20) passender zapfenförmiger Ansatz (26) auf der Druckfläche (24) des Druckstücks (23) ist.

6. Spulengatter nach Anspruch 4, **dadurch gekennzeichnet, dass** das Halteglied als ein einen Vorsprung (42) auf der Innenwand der Strebe (4a) umfassendes Teil (28a) ausgebildet ist.

7. Spulengatter nach einem der vorhergehenden Ansprüche, **dadurch gekennzeichnet, dass** die Haltemittel ein mit dem Druckstück (23) verbundenes elastische Abstützmittel aufweisen, durch das das Druckstück (23) gegen die Innenwand der Strebe (4a) andrückbar ist.

8. Spulengatter nach Anspruch 7, **dadurch gekennzeichnet, dass** das elastische Abstützmittel ein im Wesentlichen haarnadelförmiges Federteil (27) aufweist, das entweder einstückig an das Druckstück (23) angeformt oder als getrenntes Teil mit diesem verbunden ist.

9. Spulengatter nach Anspruch 7 oder 8, **dadurch gekennzeichnet, dass** das Druckstück (23) und das Abstützmittel jeweils eine durchgehende Bohrung (37, 36) für den Schraubenbolzen (17) aufweisen und die Bohrung (36) in dem Abstützmittel zur zumindest teilweisen Aufnahme des Kopfes (19) des Schraubenbolzens (17) eingerichtet ist.

10. Spulengatter nach einem der Ansprüche 7 bis 9, **dadurch gekennzeichnet, dass** zumindest das elastische Abstützmittel eine Einrichtung (33) zum Ansetzen eines das Abstützmittel gegen das Druckstück (23) drückenden Werkzeuges aufweist.

11. Spulengatter nach Anspruch 10, **dadurch gekennzeichnet, dass** die Einrichtung einen Fortsatz (33) und eine diesem zugeordnete, gegebenenfalls vertiefte Werkzeugsangrifffläche (35) aufweisen, die an dem elastischen Stützmittel (27, 28) und dem Druckstück (23) angeordnet sind.

12. Spulengatter nach einem der vorhergehenden Ansprüche, **dadurch gekennzeichnet, dass** das Druckstück (23) eine Auflagefläche (25) zur axialen Abstützung des Schraubenbolzens (17) aufweist, deren Abstand von der gegenüberliegenden Druckfläche (24) so bemessen ist, dass der Schraubenbolzen (17) im festgezogenen Zustand im Wesentlichen mit der Strebenaußenwand abschliessend in der Durchgangsbohrung (20) aufgenommen ist.

13. Spulengatter nach einem der vorhergehenden Ansprüche, **dadurch gekennzeichnet, dass** die Durchgangsbohrung (20) als Langloch ausgebildet ist.

## Claims

1. Bobbin creel (1) for holding bobbins (2) on which threadlike material (3) is wound, with tubular bearing struts (4a, 4b, 4c) and tubular connection struts (15-8) which are connected together at junctions (14) by connection means to form a preferably stable frame which comprises slip-on holders (10), disposed at bearing and/or connection struts, for bobbins, **characterised in that** the connection means comprise a connection element (15), which can be pushed into a tubular strut (4a), and a threaded nut (16), which is preferably inserted in another tubular strut (5) extending from the respective junction (14), that the connection element (15) comprises a pressure piece (23), which is adapted to lie against the inner wall of the associated strut (4a), and holding means (26, 27, 28), which are connected to the pressure piece and by means of which the connection element (15) can be fixed in a releasable manner in the strut (4a), and that, when the connection element (15) is pushed in, the two struts (4a, 5) are connected together by a screw bolt (17) which passes through a through-bore (20) in the wall of one strut (4a) and is screwed into the threaded nut (16) and supported on the pressure piece (23).

2. Bobbin creel according to Claim 1, **characterised in that** the connection element (15) consists of plastics material.

3. Bobbin creel according to Claim 1 or 2, **characterised in that** the pressure piece (23) has a pressure face (24), which is substantially adapted to the strut inner wall, for lying against the inner wall of the strut (4a).

4. Bobbin creel according to any one of the preceding Claims, **characterised in that** the holding means comprise a holding member (26) which is adapted to positively co-operate with the through-bore (20) in the strut (4a).

5. Bobbin creel according to Claim 4, **characterised in that** the holding member is a peg-shaped lug (26), which fits into the through-bore (20), on the pressure face (24) of the pressure piece (23).

6. Bobbin creel according to Claim 4, **characterised in that** the holding member is formed as a part (28a) embracing a projection (42) on the inner wall of the strut (4a).

7. Bobbin creel according to any one of the preceding Claims, **characterised in that** the holding means comprise an elastic support means which is connected to the pressure piece (23) and by means of which the pressure piece (23) can be pressed against the inner wall of the strut (4a).

8. Bobbin creel according to Claim 7, **characterised in that** the elastic support means comprises a substantially hairpin-shaped spring part (27) which is either moulded integrally onto the pressure piece (23) or connected to the latter as a separate part.

9. Bobbin creel according to Claim 7 or 8, **characterised in that** the pressure piece (23) and the support means each comprise a continuous bore (37, 36) for the screw bolt (17), and the bore (36) in the support means is adapted to at least partly hold the head (19) of the screw bolt (17).

10. Bobbin creel according to any one of Claims 7 to 9, **characterised in that** at least the elastic support means comprises a device (33) for applying a tool which presses the support means against the pressure piece (23).

11. Bobbin creel according to Claim 10, **characterised in that** the device comprises a prolongation (33) and a tool application face (35) which is associated with the latter and is optionally recessed, these being disposed at the elastic support means (27, 28) and the pressure piece (23).

12. Bobbin creel according to any one of the preceding Claims, **characterised in that** the pressure piece (23) comprises a bearing face (25) for axially supporting the screw bolt (17), the spacing of which face from the opposite pressure face (24) is determined such that the screw bolt (17) is substantially held flush with the strut outer wall in the through-bore (20) in the tightened state.

13. Bobbin creel according to any one of the preceding Claims, **characterised in that** the through-bore (20) is formed as an elongate hole.

## Revendications

1. Cantre à bobines (1) destiné à recevoir des bobines sur lesquelles est enroulé un produit (3) sous forme de fil, comportant des montants-supports (4a, 4b, 4c) tubulaires et des traverses de liaison (5-8) tubulaires qui sont liés les uns aux autres par des moyens d'assemblage, en des points d'assemblage (14), pour former un bâti, de préférence stable, qui porte des broches-supports (10) pour les bobines disposées sur les montants-supports et/ou les traverses de liaison, **caractérisé en ce que** les moyens d'assemblage comprennent un élément d'assemblage (15) à introduire dans un montant-support (4a) tubulaire et un écrou fileté (16), de préférence inséré dans une autre traverse (5) tubulaire, qui s'étend à partir du point d'assemblage (14) considéré, **en ce que** l'élément d'assemblage (15) comprend une pièce de pression (23) conformée de manière à venir en appui sur la paroi intérieure du montant-support (4a) concerné, ainsi que des moyens de retenue (26, 27, 28) liés à celle-ci, par lesquels l'élément d'assemblage (15) peut être fixé de manière démontable dans le montant-support (4a), et **en ce que** lorsque l'élément d'assemblage (15) est emmanché, les montant-support et traverse de liaison (4a, 5) concernés sont liés l'un à l'autre par une vis (17) qui est engagée dans un trou traversant (20) dans la paroi du montant-support (4a), est vissée dans l'écrou fileté (16) et prend appui sur la pièce de pression (23).

2. Cantre à bobines selon la revendication 1, **caractérisé en ce que** l'élément d'assemblage (15) est en matière plastique.

3. Cantre à bobines selon la revendication 1 ou 2, **caractérisé en ce que** la pièce de pression (23) présente une surface de pression (24) essentiellement adaptée à la paroi intérieure du montant-support, destinée à venir en appui sur la paroi intérieure du montant-support (4a).

4. Cantre à bobines selon une des revendications précédentes, **caractérisé en ce que** les moyens de retenue présentent un organe de retenue (26) adapté pour coopérer par complémentarité de formes avec le trou traversant (20) du montant-support (4a).

5. Cantre à bobines selon la revendication 4, **caractérisé en ce que** l'organe de retenue (26) est un bossage (26) en forme de téton sur la surface de pression (24) de la pièce de pression (23), qui s'engage dans le trou traversant (20).

6. Cantre à bobines selon la revendication 4, **caractérisé en ce que** l'organe de retenue est conformé en élément (28a) pourvu d'une saillie (42) sur la paroi intérieure du montant-support (4a).

7. Cantre à bobines selon une des revendications précédentes, **caractérisé en ce que** les moyens de retenue présentent un moyen de poussée élastique qui est lié à la pièce de pression (23) et par lequel ladite pièce de pression (23) peut être pressée contre la paroi du montant-support (4a).

8. Cantre à bobines selon la revendication 7, **caractérisé en ce que** le moyen de poussée élastique comprend un élément formant ressort (27), essentiellement en forme d'épingle à cheveux, qui soit est réalisé d'un bloc avec la pièce de pression (23), soit est lié à celle-ci en tant qu'élément distinct.

9. Cantre à bobines selon la revendication 7 ou 8, **caractérisé en ce que** la pièce de pression (23) et le moyen de poussée présentent chacun un trou traversant (37, 36) pour la vis (17) et **en ce que** le trou (36) dans le moyen de poussée est agencé pour recevoir au moins partiellement la tête (19) de la vis (17).

10. Cantre à bobines selon une des revendications 7 à 9, **caractérisé en ce qu'**au moins le moyen de poussée élastique comprend un dispositif (33) pour la mise en place d'un outil qui repousse le moyen de pression en direction de la pièce de pression (23).

11. Cantre à bobines selon la revendication 10, **caractérisé en ce que** le dispositif présente un prolongement (33) et une surface d'action d'outil (35) associée à celui-ci, éventuellement en creux, aménagés sur le moyen de poussée (27, 28) élastique et la pièce de pression (23).

12. Cantre à bobines selon une des revendications précédentes, **caractérisé en ce que** la pièce de pression (23) présente une surface d'appui (25) pour l'appui axial de la vis (17), dont la distance par rapport à la surface de pression (24) en vis-à-vis est telle que la vis (17) à l'état serré soit essentiellement logée dans le trou traversant (20) et ferme essentiellement celui-ci côté surface extérieure du montant-support.

13. Cantre à bobines selon une des revendications précédentes, **caractérisé en ce que** le trou traversant (20) est conformé en trou oblong.
